(19) Europäisches Patentamt / European Patent Office / Office européen des brevets

(11) **EP 4 072 088 B1**

(12) **EUROPEAN PATENT SPECIFICATION**

(45) Date of publication and mention
of the grant of the patent:
**01.10.2025 Bulletin 2025/40**

(21) Application number: **20897338.8**

(22) Date of filing: **27.08.2020**

(51) International Patent Classification (IPC):
***H04L 25/02*** *(2006.01)*

(52) Cooperative Patent Classification (CPC):
**H04L 25/0212; H04L 25/0224**

(86) International application number:
**PCT/CN2020/111850**

(87) International publication number:
**WO 2021/109639 (10.06.2021 Gazette 2021/23)**

(54) **CHANNEL ESTIMATION METHOD AND APPARATUS, AND DEVICE AND STORAGE MEDIUM**

VERFAHREN UND VORRICHTUNG ZUR KANALSCHÄTZUNG SOWIE VORRICHTUNG UND SPEICHERMEDIUM

PROCÉDÉ ET APPAREIL D'ESTIMATION DE CANAL, DISPOSITIF ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2019 CN 201911221337**

(43) Date of publication of application:
**12.10.2022 Bulletin 2022/41**

(73) Proprietor: **Sanechips Technology Co., Ltd.**
**Shenzhen, Guangdong 518055 (CN)**

(72) Inventor: **LIANG, Lihong**
**Shenzhen, Guangdong 518055 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
EP-A1- 2 120 359    WO-A1-2005/043851
WO-A1-2010/057382    WO-A1-2010/057382
CN-A- 1 780 156    CN-A- 101 102 599
CN-A- 101 534 266    CN-A- 101 626 354
CN-A- 110 311 871    US-A1- 2018 034 731
US-A1- 2018 034 731

• YANG WEI, ZHANG LINYUAN; XU JINGJING; SHAO XIAOTAO: "Power Control and Capacity Expansion of Cooperation MC-CDMA in Mine Tunnel", JOURNAL OF CHINA COAL SOCIETY, vol. 44, no. 5, 1 May 2016 (2016-05-01), pages 64 - 70, XP055819350, DOI: 10.13245/j.hust.160512

## Description

## Technical Field

The present invention relates to wireless communication networks, and more particularly, to a channel estimation method and apparatus, a device, and a storage medium.

## Background

In a typical wireless mobile communication system, due to the influence of a communication environment, multi-path fading and noise will exist in received signals, which will affect the quality of the received signals. In order to improve the performance of a receiver, a receiving end performs channel estimation, and performs channel equalization based on the result of channel estimation, so as to compensate for the influence of channel fading. The accuracy of channel estimation largely determines the channel equalization performance of the receiver. The existing channel estimation methods have the problems of insufficient noise suppression or filtering out part of the signals, and the channel estimation accuracy is poor.

Patent documents WO2010057382, CN110311871, EP2120359, and US2018034731 provide respective technical solutions; however, the above mentioned problem still remains unsolved.

## Summary

The present invention provides a channel estimation method and apparatus, a device, and a storage medium, which can improve the accuracy of channel estimation.

An embodiment of the present invention provides a channel estimation method. The method may include the following operations. An initial channel estimation is determined according to a received time-domain training sequence and a local time-domain training sequence, and the power of each path of the initial channel estimation is calculated. A channel estimation window of a set length is provided in the initial channel estimation, and a noise threshold is determined according to the power of a path within the channel estimation window and/or the power of a path outside the channel estimation window. A number of effective paths is determined according to the noise threshold and the power of each path of the channel estimation window. A path is selected for the initial channel estimation according to the number of effective paths to obtain a target channel estimation.

An embodiment of the present invention provides a channel estimation apparatus, which may include: an initial channel estimation determination module, configured to determine an initial channel estimation according to a received time-domain training sequence and a local time-domain training sequence, and calculate the power of each path of the initial channel estimation; a noise threshold determination module, configured to provide a channel estimation window of a set length in the initial channel estimation, and determine a noise threshold according to the power of a path within the channel estimation window and/or the power of a path outside the channel estimation window; an effective path quantity determination module, configured to determine a number of effective paths according to the noise threshold and the power of each path of the channel estimation window; and a target channel estimation acquisition module, configured to select a path for the initial channel estimation according to the number of effective paths to obtain a target channel estimation.

An embodiment of the present invention provides a communication device, which may include a memory, a processor and a computer program that is stored on the memory and runnable on the processor. The processor, when executing the program, implements the channel estimation method as described in the embodiment of the present invention.

An embodiment of the present invention provides a storage medium, having a computer program stored thereon. The computer program, when executed by a processor, implements the channel estimation method as described in the embodiment of the present invention.

## Brief Description of the Drawings

Fig. 1 is a flowchart of a channel estimation method in an embodiment of the present invention;

Fig. 2 is a structural block diagram of a channel estimation apparatus in an embodiment of the present invention; and

Fig. 3 is a schematic structure diagram of a device in an embodiment of the present invention.

## Detailed Description of the Embodiments

For purposes of clarity and understanding the objects, technical solutions and advantages of the present invention, the embodiments of the present invention are described below in combination with the accompanying drawings. It should be noted that in the case of no conflict, the embodiments in the present invention and the features in the embodiments may be arbitrarily combined with each other.

In the cell search of a 5G system, blind detection of a Physical Broadcast Channel (PBCH) Demodulation Reference Signal (DMRS) is required, where the key step is to perform channel estimation on the received PBCH DMRS.

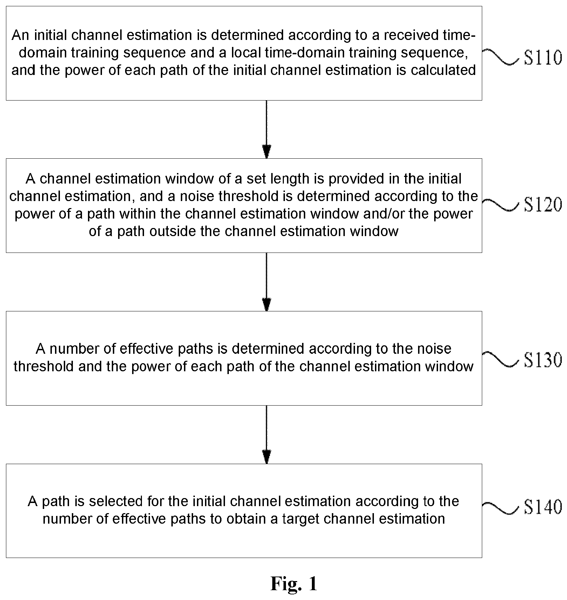

In an embodiment, Fig. 1 is a flowchart of a channel estimation method in an embodiment of the present invention. The present embodiment is applicable to a case where a channel is estimated. The present embodiment may be performed by a receiving end. The receiving end may be a scheduling node (e.g. a base station, an access point, etc.) or a User Equipment (UE). As shown in Fig. 1, the method provided by the present embodiment includes S110-S140.

At S110, an initial channel estimation is determined according to a received time-domain training sequence and a local time-domain training sequence, and the power of each path of the initial channel estimation is calculated.

The initial channel estimation is a time-domain initial channel estimation.

In an embodiment, the manner of determining an initial channel estimation according to a received time-domain training sequence and a local time-domain training sequence may be that: the received time-domain training sequence and the local time-domain training sequence are correlated to obtain an initial channel estimation.

According to the detection process of a Primary Synchronization Signal (PSS) and a Secondary Synchronization Signal (SSS) of the cell search, a cell ID and a cell timing may be obtained. On this basis, PBCH DMRSs of 256 samples of 1 symbol in a time domain are received, i.e. a received time-domain training sequence. The received time-domain training sequence and the local time-domain training sequence are correlated to obtain an initial channel estimation.

In an embodiment, the manner of determining an initial channel estimation according to a received time-domain training sequence and a local time-domain training sequence may be that: Fourier transform is performed on the received time-domain training sequence and the local time-domain training sequence respectively to obtain a first frequency-domain training sequence and a second frequency-domain training sequence; and the first frequency-domain training sequence and the second frequency-domain training sequence are multiplied, and inverse Fourier transform is performed on a product to obtain an initial channel estimation.

After receiving the PBCH DMRSs of 256 samples of 1 symbol in the time domain, fast Fourier transform (FFT) of the 256 samples is performed to obtain a frequency-domain training sequence.

60 subcarrier signals R1, R2 and R3 on Orthogonal Frequency Division Multiplexing (OFDM) symbols 1, 2 and 3 are extracted according to the PBCH DMRS and SSS subcarrier sequence numbers defined in section 7.4.3 of protocol 3GPP38.211. The PBCH DMRS and SSS on symbol 2 are uniformly extracted according to a PBCH DMRS subcarrier offset, and multiplied by conjugates of local frequency-domain training sequences S1, S2 and S3 to obtain a descrambling result in the frequency domain $H_i = R_i * conj(S_i)$, where i=1, 2, 3. The descrambling result of guard sub-carriers on symbol 2 is set to 0, or obtained by linear interpolation of adjacent descrambling results.

To perform 128-sample Inverse Fast Fourier Transform (IFFT) on Hi, it is necessary to first zero-pad the descrambling result containing 60 subcarriers: $H_i$= [$H_{i,30}$,$H_{i,31}$,...,$H_{i,59}$,zeros(1,68),$H_{i,0}$,$H_{i,1}$,...,$H_{i,29}$]. Where $H_{i,0}$ represents a descrambling result of a 0th subcarrier among 60 subcarriers of symbol i. $H_{i,1}$ represents a descrambling result of a 1st subcarrier among 60 subcarriers of symbol i, and otherwise, Zeros(1,68) represents 68 zeros. 128-sample IFFT transform is performed on the descrambling result after zero padding to obtain an initial channel estimation $h_i = ifft(H_i)$ corresponding to each symbol. The average value of the initial channel estimations of 3 symbols is then calculated, where $h=(h1+h2+h3)/3=[h_0,h_1,...,h_{127}]$.

In an embodiment, the manner of calculating the power of each path of the initial channel estimation is that: the sum of squares of real and imaginary parts of a path is calculated, and a square root is extracted.

At S120, a channel estimation window of a set length is provided in the initial channel estimation, and a noise threshold is determined according to the power of a path within the channel estimation window and/or the power of a path outside the channel estimation window.

The set length may be understood as the number of samples in the channel estimation window, which may be determined by the protocol or the number of samples in the received signal time-domain training sequence.

In an embodiment, the manner of determining a noise threshold according to the power of a path within the channel estimation window may be that: a power average value of a first quantity of paths with a minimum power in the channel estimation window is calculated, and determined as a noise power; and the noise power is weighted according to a set noise threshold factor to obtain a noise threshold.

The first quantity may be determined according to the length of the channel estimation window. A set noise threshold factor may be set to any value between 3 and 5.

In an embodiment, the length of the channel estimation window is W=24 samples, the powers of W paths in the channel estimation window are ranked from large to small, and an average value of the powers of M=8 paths with the minimum power in the channel estimation window is calculated and determined as the noise power. The noise power is then multiplied by the set noise threshold factor to obtain a noise threshold.

In an embodiment, the manner of determining a noise threshold according to the power of a path outside the channel estimation window may be that: a power average value of paths outside the channel estimation window is calculated, and determined as a noise power; and the noise power is weighted according to a set noise threshold factor to obtain a noise threshold.

A set noise threshold factor may be set to any value between 3 and 5. The noise power is then multiplied by the set noise threshold factor to obtain a noise threshold.

At S130, the number of effective paths is determined according to the noise threshold and the power of each path in the channel estimation window.

In an embodiment, the manner of determining a number of effective paths according to the noise threshold and the power of each path may be that: the power of each path in the channel estimation window is compared with the noise threshold respectively, and the quantity of paths with power greater than the noise threshold is acquired, and determined as a number of effective paths.

In an embodiment, after the quantity of paths with power greater than the noise threshold is acquired, the method further includes the following steps. Paths with power greater than the noise threshold in the channel estimation window are determined as initial effective paths, and a total power of the initial effective paths is calculated as a first total power. A total power of a second quantity of paths with a maximum power among the initial effective paths is calculated as a second total power. A total power of a third quantity of paths with a maximum power among the initial effective paths is calculated as a third total power, where the second quantity is greater than the third quantity by 1. If a ratio of the second total power to the first total power is greater than or equal to a first set value and a ratio of the third total power to the first total power is less than the first set value, the second quantity is determined as the number of effective paths.

The first set value is a positive number less than 1.

In an embodiment, the total power of N paths with power greater than the noise threshold is calculated:

$$Q = \sum_{i=0}^{N-1} P_i$$ , where $P_i$ is the power of the ith path with the power greater than the noise threshold. A total power $Q1$ of L ($1 \leq L \leq N$) paths with the maximum power greater than the noise threshold in the paths is calculated, and a total power $Q2$ of L-1 paths with the maximum power greater than the noise threshold in the paths is calculated, where L ranges from 1 until the following conditions are satisfied: $\dfrac{Q1}{Q} \geq \gamma$ and $\dfrac{Q2}{Q} < \gamma$ , and L is determined as the number of effective paths.

At S140, a path is selected for the initial channel estimation according to the average value of the number of effective paths to obtain a target channel estimation.

In an embodiment, after the number of effective paths is determined according to the noise threshold and the power of each path in the channel estimation window, the method further includes the following steps. The step of determining an initial channel estimation according to a received time-domain training sequence and a local time-domain training sequence is performed again until the number of times of obtaining the number of effective paths reaches a set number.

In an embodiment, S110-S130 are performed for C=8 times in succession, and the number of effective paths is N0, N1, ..., N8, respectively.

The manner of selecting a path for the initial channel estimation according to the number of effective paths to obtain a target channel estimation may be that: an average value of the number of effective paths of the set number is calculated, and a path is selected for the initial channel estimation according to the average value of the number of effective paths to obtain a target channel estimation.

The formula for calculating the average value of the number of the effective paths for C times is:

$$S = \left\lceil \frac{1}{C} \sum_{i=0}^{C-1} N_i \right\rceil$$ , where $\lceil\ \rceil$ represents rounding up.

In an embodiment, the manner of selecting a path for the initial channel estimation according to the average value of the number of effective paths to obtain a target channel estimation may be that: if the average value is greater than a second set value, maximum power paths with the quantity equal to the average value in the channel estimation window are determined as signal paths, and paths other than the signal paths in the initial channel estimation are determined as noise paths; and if the average value is less than the second set value, maximum power paths with the quantity equal to the second set value in the channel estimation window are determined as signal paths, and paths other than the signal paths in the initial channel estimation are determined as noise paths.

The second set value S1 may be set to 3. If the average value is greater than a second set value, S paths with a maximum power in the channel estimation window are determined as signal paths, and paths other than the signal paths in the initial channel estimation are determined as noise paths and set to 0. If the average value is less than a second set value, S1 paths with a maximum power in the channel estimation window are determined as signal paths, and paths other than the signal paths in the initial channel estimation are determined as noise paths and set to 0.

According to the technical solutions of the embodiments of the present invention, an initial channel estimation is first determined according to a received time-domain training sequence and a local time-domain training sequence, and the power of each path of the initial channel estimation is calculated. A channel estimation window of a set length is then provided in the initial channel estimation, and a noise threshold is determined according to the channel estimation window. A number of effective paths is then determined according to the noise threshold and the power of each path of the channel estimation window. A path is finally selected for the initial channel estimation according to the number of effective paths to obtain a target channel estimation. The number of effective paths is determined according to the noise threshold and the power of each path in the channel estimation window, so that the accuracy of channel estimation can be improved.

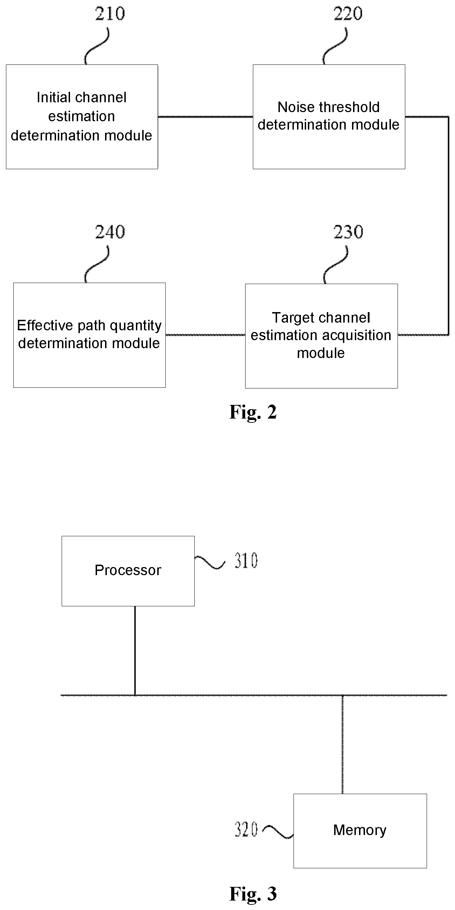

Fig. 2 is a structural block diagram of a channel estimation apparatus according to an embodiment of the present invention. As shown in Fig. 2, the apparatus includes: an initial channel estimation determination module 210, a noise threshold determination module 220, an effective path quantity determination module 230, and a target channel estimation acquisition module 240.

The initial channel estimation determination module 210 is configured to determine an initial channel estimation according to a received time-domain training sequence and a local time-domain training sequence, and calculate the power of each path of the initial channel estimation.

The noise threshold determination module 220 is configured to provide a channel estimation window of a set length in the initial channel estimation, and determine a noise threshold according to the power of a path within the channel estimation window and/or the power of a path outside the channel estimation window.

The effective path quantity determination module 230 is configured to determine a number of effective paths according to the noise threshold and the power of each path of the channel estimation window.

The target channel estimation acquisition module 240 is configured to select a path for the initial channel estimation according to the number of effective paths to obtain a target channel estimation.

In an embodiment, the initial channel estimation determination module 210 is further configured to perform the following operation.

The received time-domain training sequence and the local time-domain training sequence are correlated to obtain an initial channel estimation.

In an embodiment, the initial channel estimation determination module 210 is further configured to perform the following operations.

Fourier transform is performed on the received time-domain training sequence and the local time-domain training sequence respectively to obtain a first frequency-domain training sequence and a second frequency-domain training sequence.

The first frequency-domain training sequence and the second frequency-domain training sequence are multiplied, and inverse Fourier transform is performed on a product to obtain an initial channel estimation.

In an embodiment, the noise threshold determination module 220 is further configured to perform the following operations.

A power average value of a first quantity of paths with a minimum power in the channel estimation window is calculated, and determined as a noise power.

The noise power is weighted according to a set noise threshold factor to obtain a noise threshold.

In an embodiment, the noise threshold determination module 220 is further configured to perform the following operations.

A power average value of paths outside the channel estimation window is calculated, and determined as a noise power.

The noise power is weighted according to a set noise threshold factor to obtain a noise threshold.

In an embodiment, the effective path quantity determination module 230 is further configured to perform the following operation.

The power of each path in the channel estimation window is compared with the noise threshold respectively, and the quantity of paths with power greater than the noise threshold is acquired, and determined as a number of effective paths.

In an embodiment, the effective path quantity determination module 230 is further configured to perform the following operations.

Paths with power greater than the noise threshold in the channel estimation window are determined as initial effective paths, and a total power of the initial effective paths is calculated as a first total power.

A total power of a second quantity of paths with a maximum power among the initial effective paths is calculated as a second total power.

A total power of a third quantity of paths with a maximum power among the initial effective paths is calculated as a third total power, where the second quantity is greater than the third quantity by 1.

If a ratio of the second total power to the first total power is greater than or equal to a first set value and a ratio of the third total power to the first total power is less than the first set value, the second quantity is determined as a number of effective paths.

In an embodiment, after a number of effective paths is determined according to the noise threshold and the power of each path in the channel estimation window, the following operations are further included.

The step of determining an initial channel estimation according to a received time-domain training sequence and a local time-domain training sequence is performed again until the number of times of obtaining the number of effective paths reaches a set number.

In an embodiment, the target channel estimation acquisition module 240 is further configured to perform the following operation.

An average value of the number of effective paths of the set number is calculated, and a path is selected for the initial channel estimation according to the average value of the number of effective paths to obtain a target channel estimation.

In an embodiment, the target channel estimation acquisition module 240 is further configured to perform the following operations.

If the average value is greater than a second set value, maximum power paths with the quantity equal to the average value in the channel estimation window are determined as signal paths, and paths other than the signal paths in the initial channel estimation are determined as noise paths.

If the average value is less than the second set value, maximum power paths with the quantity equal to the second set value in the channel estimation window are determined as signal paths, and paths other than the signal paths in the initial channel estimation are determined as noise paths.

Fig. 3 is a schematic structure diagram of a device according to an embodiment of the present invention. As shown in Fig. 3, the device provided in the present invention includes a processor 310 and a memory 320. There may be one or more processors 310 in the device. Fig. 3 takes one processor 310 as an example. There may be one or more memories 320 in the device. Fig. 3 takes one memory 320 as an example. The processor 310 and the memory 320 in the device may be connected by a bus or other means, as exemplified by a bus connection in Fig. 3. In an embodiment, the device is a receiving end. The receiving end may be one of a scheduling node, a base station, or a UE.

As a computer-readable storage medium, the memory 320 may be configured to store a software program, a computer-executable program, and a module, such as a program instruction/module (e.g., a coding module and a first sending module in a data transmission apparatus) corresponding to the device in any embodiment of the present invention. The memory 320 may include a program storage region and a data storage region. The program storage region may store an operating system and an application program needed by at least one function. The data storage region may store data created according to the use of the device, etc. In addition, the memory 320 may include a high-speed Random Access Memory (RAM), and may further include a non-volatile memory such as a disk storage device, a flash device, or other non-volatile solid storage devices. In some examples, the memory 320 may further include memories remotely located relative to the processor 310, which may be connected to the device over a network. The examples of such networks include, but are not limited to, the Internet, the Intranet, local area networks, mobile communication networks, and combinations thereof.

The device provided above may be configured to execute the channel estimation method provided in any one of the above-mentioned embodiments, and has corresponding functions and effects.

Correspondingly, the program stored in the memory 320 may be a program instruction/module corresponding to the signal processing method provided in the embodiment of the present invention. The processor 310 runs the software program, instruction, and module stored in the memory 320, thereby executing one or more types of function applications and data processing of the computer device, namely implementing the signal processing method in the method embodiment. It can be understood that the device, when being a receiving end, may execute the signal processing method provided in any embodiment of the present invention, and has corresponding functions and effects. The device may be one of a base station or a UE.

An embodiment of the present invention also provides a storage medium including a computer-executable instruction. The computer-executable instruction, when executed by a processor of a computer, is used for executing a signal processing method, including: determining an initial channel estimation according to a received time-domain training sequence and a local time-domain training sequence, and calculating the power of each path of the initial channel estimation; setting a channel estimation window with a preset length in the initial channel estimation, and determining a noise threshold according to the power of a path within the channel estimation window and/or the power of a path outside the channel estimation window; determining a number of effective paths according to the noise threshold and the power of each path of the channel estimation window; and selecting a path for the initial channel estimation according to the number of effective paths to obtain a target channel estimation.

Those skilled in the art should know that the term UE covers a wireless UE of any proper type, such as a mobile phone, a portable data processing apparatus, a portable web browser, or a vehicle-mounted mobile station.

Generally, various embodiments of the present invention may be implemented in hardware or dedicated circuits, software, logics, or any combination thereof. For example, some aspects may be implemented in hardware, while the other aspects may be implemented in firmware or software executable for a controller, a microprocessor, or another computing device. However, the present invention is not limited thereto.

The embodiment of the present invention may be implemented by a data processor of a mobile device by executing a computer program instruction, such as by hardware or a combination of software and hardware in a processor entity. The computer program instruction may be an assembly instruction, an Instruction Set Architecture (ISA) instruction, a machine instruction, a machine related instruction, a microcode, a firmware instruction, a state setting data, or a source code or target code written by any combination of one or more programming languages.

**The** block diagram of any logic flow in the drawings of the present invention may represent program steps, or mutually connected logic circuits, modules, and functions, or a combination of program steps and logic circuits, modules, and functions. **The** computer program may be stored in a memory. **The** memory may be implemented into any type suitable for the local technical environment by use of any proper data storage technology, such as, but not limited to, a Read-Only Memory (ROM), a RAM, and an optical memory device and system (Digital Video Disc (DVD) or Compact Disk (CD)). **The** computer-readable medium may include a non-transitory storage medium. **The** data processor may be of any type suitable for the local technical environment, such as, but not limited to, a general-purpose computer, a single-purpose computer, a microprocessor, a Digital Signal Processor (DSP), an Application Specific Integrated Circuit (ASIC), a Field-Programmable Gate Array (FPGA), and a multi-core processor architecture-based processor. Detailed descriptions about exemplary embodiments of the present invention have been made above through exemplary and nonrestrictive examples. However, in combination with the drawings and the claims, various modifications and regulations of the above embodiments are apparent to those skilled in the art, but do not depart from the scope of the present invention. Therefore, the appropriate scope of the present invention is determined according to the claims.

**Claims**

1. A channel estimation method, comprising:

   determining an initial channel estimation according to a received time-domain training sequence and a local time-domain training sequence, and calculating the power of each path of the initial channel estimation (S110);
   setting a channel estimation window with a preset length in the initial channel estimation, and determining a noise threshold according to the power of a path within the channel estimation window and/or the power of a path outside the channel estimation window (S120);
   determining a number of effective paths according to the noise threshold and the power of each path of the channel estimation window (S130); and
   selecting a path for the initial channel estimation according to the number of effective paths to obtain a target channel estimation (S140);
   wherein the determining a number of effective paths according to the noise threshold and the power of each path comprises: comparing the power of each path in the channel estimation window with the noise threshold respectively, acquiring the quantity of paths with power greater than the noise threshold;
   after acquiring the quantity of paths with power greater than the noise threshold, the method further comprises:

      determining paths with power greater than the noise threshold in the channel estimation window as initial effective paths, and calculating a total power of the initial effective paths as a first total power;
calculating a total power of a second quantity of paths with a maximum power among the initial effective paths as a second total power;
calculating a total power of a third quantity of paths with a maximum power among the initial effective paths as a third total power, the second quantity being greater than the third quantity by 1; and
if a ratio of the second total power to the first total power is greater than or equal to a first set value and a ratio of the third total power to the first total power is less than the first set value, determining the second quantity as the number of effective paths.

2. The method according to claim 1, wherein the determining an initial channel estimation according to a received time-domain training sequence and a local time-domain training sequence comprises:
correlating the received time-domain training sequence and the local time-domain training sequence to obtain an initial channel estimation.

3. The method according to claim 1, wherein the determining an initial channel estimation according to a received time-domain training sequence and a local time-domain training sequence comprises:

   performing Fourier transform on the received time-domain training sequence and the local time-domain training sequence respectively to obtain a first frequency-domain training sequence and a second frequency-domain training sequence; and
   multiplying the first frequency-domain training sequence and the second frequency-domain training sequence, and performing inverse Fourier transform on a result of the multiplying to obtain an initial channel estimation.

4. The method according to claim 1, wherein the determining a noise threshold according to the power of a path within the channel estimation window comprises:

   calculating a power average value of a first quantity of paths with a minimum power in the channel estimation window, and determining the power average value as a noise power; and
   weighting the noise power according to a set noise threshold factor to obtain a noise threshold.

5. The method according to claim 1, wherein the determining a noise threshold according to the power of a path outside the channel estimation window comprises:

> calculating a power average value of paths outside the channel estimation window, and determining the power average value as a noise power; and
> weighting the noise power according to a set noise threshold factor to obtain a noise threshold.

6. The method according to claim 1, wherein after determining the number of effective paths according to the noise threshold and the power of each path in the channel estimation window, the method further comprises:

> returning to perform the step of determining an initial channel estimation according to a received time-domain training sequence and a local time-domain training sequence until the number of times of obtaining the number of effective paths reaches a set number; and
> accordingly, the selecting a path for the initial channel estimation according to the number of effective paths to obtain a target channel estimation comprises:
> calculating an average value of the number of effective paths of the set number, and selecting a path for the initial channel estimation according to the average value of the number of effective paths to obtain a target channel estimation.

7. The method according to claim 6, wherein the selecting a path for the initial channel estimation according to the average value of the number of effective paths to obtain a target channel estimation comprises:

> if the average value is greater than a second set value, determining maximum power paths with the quantity equal to the average value in the channel estimation window as signal paths, and determining paths other than the signal paths in the initial channel estimation as noise paths; and
> if the average value is less than the second set value, determining maximum power paths with the quantity equal to the second set value in the channel estimation window as signal paths, and determining paths other than the signal paths in the initial channel estimation as noise paths.

8. A channel estimation apparatus, comprising:

> an initial channel estimation determination module (210), configured to determine an initial channel estimation according to a received time-domain training sequence and a local time-domain training sequence, and calculate the power of each path of the initial channel estimation;
a noise threshold determination module(220), configured to provide a channel estimation window of a set length in the initial channel estimation, and determine a noise threshold according to the power of a path within the channel estimation window and/or the power of a path outside the channel estimation window;
an effective path quantity determination module(230), configured to determine a number of effective paths according to the noise threshold and the power of each path of the channel estimation window; and
a target channel estimation acquisition module(240), configured to select a path for the initial channel estimation according to the number of effective paths to obtain a target channel estimation;
the effective path quantity determination module (230) is further configured to compare the power of each path in the channel estimation window with the noise threshold respectively, acquiring the quantity of paths with power greater than the noise threshold; determine paths with power greater than the noise threshold in the channel estimation window as initial effective paths, and calculating a total power of the initial effective paths as a first total power; calculate a total power of a second quantity of paths with a maximum power among the initial effective paths as a second total power; calculate a total power of a third quantity of paths with a maximum power among the initial effective paths as a third total power, the second quantity being greater than the third quantity by 1; and if a ratio of the second total power to the first total power is greater than or equal to a first set value and a ratio of the third total power to the first total power is less than the first set value, determine the second quantity as the number of effective paths.

9. A computer-readable storage medium, having a computer program stored thereon, wherein the program, when executed by a processor, implements the channel estimation method according to any one of claims 1 to 7.

**Patentansprüche**

1. Kanalschätzungsverfahren, umfassend:

> Bestimmen einer anfänglichen Kanalschätzung entsprechend einer empfangenen Zeitbereichstrainingssequenz und einer lokalen Zeitbereichstrainingssequenz und Berechnen der Leistung jedes Pfads der anfänglichen Kanalschätzung (S110);

Festlegen eines Kanalschätzungsfensters mit einer voreingestellten Länge bei der anfänglichen Kanalschätzung und Bestimmen eines Rauschschwellenwerts entsprechend der Leistung eines Pfads innerhalb des Kanalschätzungsfensters und/oder der Leistung eines Pfads außerhalb des Kanalschätzungsfensters (S120);

Bestimmen einer Anzahl von effektiven Pfaden entsprechend des Rauschschwellenwerts und der Leistung jedes Pfads des Kanalschätzungsfensters (S130); und

Auswählen eines Pfads für die anfängliche Kanalschätzung entsprechend der Anzahl von effektiven Pfaden, um eine Zielkanalschätzung (S140) zu erhalten;

wobei das Bestimmen einer Anzahl von effektiven Pfaden entsprechend dem Rauschschwellenwert und der Leistung jedes Pfads umfasst:

Vergleichen der Leistung jedes Pfads in dem Kanalschätzungsfenster jeweils mit dem Rauschschwellenwert, Erfassen der Menge von Pfaden mit einer Leistung, die größer als der Rauschschwellenwert ist;

nach dem Erfassen der Menge von Pfaden mit der Leistung größer als der Rauschschwellenwert, das Verfahren ferner umfasst:

Bestimmen von Pfaden mit der Leistung, die größer als der Rauschschwellenwert in dem Kanalschätzungsfenster ist, als anfängliche effektive Pfade und Berechnen einer Gesamtleistung der anfänglichen effektiven Pfade als eine erste Gesamtleistung;

Berechnen einer Gesamtleistung einer zweiten Menge von Pfaden mit einer Maximalleistung unter den anfänglichen effektiven Pfaden als eine zweite Gesamtleistung;

Berechnen einer Gesamtleistung einer dritten Menge von Pfaden mit einer Maximalleistung unter den anfänglichen effektiven Pfaden als eine dritte Gesamtleistung, wobei die zweite Menge um 1 größer als die dritte Menge ist; und

falls ein Verhältnis der zweiten Gesamtleistung zu der ersten Gesamtleistung größer als oder gleich einem ersten festgelegten Wert ist und ein Verhältnis der dritten Gesamtleistung zu der ersten Gesamtleistung kleiner als der erste festgelegte Wert ist, Bestimmen der zweiten Menge als die Anzahl von effektiven Pfaden.

2. Verfahren nach Anspruch 1, wobei das Bestimmen einer anfänglichen Kanalschätzung entsprechend einer empfangenen Zeitbereichstrainingssequenz und einer lokalen Zeitbereichstrainingssequenz umfasst:

Korrelieren der empfangenen Zeitbereichstrainingssequenz und der lokalen Zeitbereichstrainingssequenz, um eine anfängliche Kanalschätzung zu erhalten.

3. Verfahren nach Anspruch 1, wobei das Bestimmen einer anfänglichen Kanalschätzung entsprechend einer empfangenen Zeitbereichstrainingssequenz und einer lokalen Zeitbereichstrainingssequenz umfasst:

Durchführen einer Fourier-Transformation an der empfangenen Zeitbereichstrainingssequenz beziehungsweise der lokalen Zeitbereichstrainingssequenz, um eine erste Frequenzbereichstrainingssequenz und eine zweite Frequenzbereichstrainingssequenz zu erhalten; und

Multiplizieren der ersten Frequenzbereichstrainingssequenz und der zweiten Frequenzbereichstrainingssequenz und Durchführen einer inversen Fourier-Transformation auf einem Ergebnis des Multiplizierens, um eine anfängliche Kanalschätzung zu erhalten.

4. Verfahren nach Anspruch 1, wobei das Bestimmen eines Rauschschwellenwerts entsprechend der Leistung eines Pfads innerhalb des Kanalschätzungsfensters umfasst:

Berechnen eines Leistungsdurchschnittswerts einer ersten Menge von Pfaden mit einer Mindestleistung in dem Kanalschätzungsfenster und Bestimmen des Leistungsdurchschnittswerts als eine Rauschleistung; und

Gewichten der Rauschleistung entsprechend einem festgelegten Rauschschwellenfaktor, um einen Rauschschwellenwert zu erhalten.

5. Verfahren nach Anspruch 1, wobei das Bestimmen eines Rauschschwellenwerts entsprechend der Leistung eines Pfads außerhalb des Kanalschätzungsfensters umfasst:

Berechnen eines Leistungsdurchschnittswerts von Pfaden außerhalb des Kanalschätzungsfensters und Bestimmen des Leistungsdurchschnittswerts als eine Rauschleistung; und

Gewichten der Rauschleistung entsprechend einem festgelegten Rauschschwellenfaktor, um einen Rauschschwellenwert zu erhalten.

6. Verfahren nach Anspruch 1, wobei, nach dem Bestimmen der Anzahl von effektiven Pfaden entsprechend dem Rauschschwellenwert und der Leistung jedes Pfads in dem Kanalschätzungsfenster, das Verfahren ferner umfasst:

Zurückkehren, um den Schritt des Bestimmens einer anfänglichen Kanalschätzung entsprechend einer empfangenen Zeitbereichstrainingssequenz und einer lokalen Zeitbereichstrainingssequenz durchzuführen, bis die Anzahl von Malen, die die Anzahl von effektiven Pfaden erhalten wurde, eine festgelegte Anzahl erreicht; und

entsprechend, das Auswählen eines Pfads für die anfängliche Kanalschätzung entsprechend der Anzahl von effektiven Pfaden, um eine Zielkanalschätzung zu erhalten, umfasst:

Berechnen eines Durchschnittswerts der Anzahl von effektiven Pfaden der festgelegten Anzahl und Auswählen eines Pfads für die anfängliche Kanalschätzung entsprechend dem Durchschnittswert der Anzahl von effektiven Pfaden, um eine Zielkanalschätzung zu erhalten.

7.   Verfahren nach Anspruch 6, wobei das Auswählen eines Pfads für die anfängliche Kanalschätzung entsprechend dem Durchschnittswert der Anzahl von effektiven Pfaden, um eine Zielkanalschätzung zu erhalten, umfasst:

falls der Durchschnittswert größer als ein zweiter festgelegter Wert ist, Bestimmen von Maximalleistungspfaden mit der Menge, die gleich dem Durchschnittswert in dem Kanalschätzungsfenster ist, als Signalpfade und Bestimmen von Pfaden, die sich von den Signalpfaden in der anfänglichen Kanalschätzung unterscheiden, als Rauschpfade; und

falls der Durchschnittswert kleiner als der zweite festgelegte Wert ist, Bestimmen von Maximalleistungspfaden mit der Menge gleich dem zweiten festgelegten Wert in dem Kanalschätzungsfenster als Signalpfade und Bestimmen von Pfaden, die sich von den Signalpfaden in der anfänglichen Kanalschätzung unterscheiden, als Rauschpfade.

8.   Kanalschätzungseinrichtung, umfassend:

ein Bestimmungsmodul (210) der anfänglichen Kanalschätzung, das konfiguriert ist, um eine anfängliche Kanalschätzung entsprechend einer empfangenen Zeitbereichstrainingssequenz und einer lokalen Zeitbereichstrainingssequenz zu bestimmen und die Leistung jedes Pfads der anfänglichen Kanalschätzung zu berechnen;

ein Rauschschwellenwertbestimmungsmodul (220), das konfiguriert ist, um bei der anfänglichen Kanalschätzung ein Kanalschätzungsfenster mit einer festgelegten Länge bereitzustellen und einen Rauschschwellenwert entsprechend der Leistung eines Pfads innerhalb des Kanalschätzungsfensters und/oder der Leistung eines Pfads außerhalb des Kanalschätzungsfensters zu bestimmen;

ein Bestimmungsmodul (230) der effektiven Pfadmenge, das konfiguriert ist, um eine Anzahl von effektiven Pfaden entsprechend dem Rauschschwellenwert und der Leistung jedes Pfads des Kanalschätzungsfensters zu bestimmen; und

ein Zielkanalschätzungserfassungsmodul (240), das konfiguriert ist, um einen Pfad für die anfängliche Kanalschätzung entsprechend der Anzahl von effektiven Pfaden auszuwählen, um eine Zielkanalschätzung zu erhalten;

das Bestimmungsmodul (230) der effektiven Pfadmenge ferner konfiguriert ist, um die Leistung jedes Pfads in dem Kanalschätzungsfenster jeweils mit dem Rauschschwellenwert zu vergleichen, um die Menge von Pfaden mit der Leistung zu erfassen, die größer als der Rauschschwellenwert ist; Bestimmen von Pfaden mit der Leistung, die größer als der Rauschschwellenwert in dem Kanalschätzungsfenster ist, als anfängliche effektive Pfade und Berechnen einer Gesamtleistung der anfänglichen effektiven Pfade als eine erste Gesamtleistung; Berechnen einer Gesamtleistung einer zweiten Menge von Pfaden mit einer Maximalleistung unter den anfänglichen effektiven Pfaden als eine zweite Gesamtleistung; Berechnen einer Gesamtleistung einer dritten Menge von Pfaden mit einer Maximalleistung unter den anfänglichen effektiven Pfaden als eine dritte Gesamtleistung, wobei die zweite Menge um 1 größer als die dritte Menge ist; und falls ein Verhältnis der zweiten Gesamtleistung zu der ersten Gesamtleistung größer als oder gleich einem ersten festgelegten Wert ist und ein Verhältnis der dritten Gesamtleistung zu der ersten Gesamtleistung kleiner als der erste festgelegte Wert ist, Bestimmen der zweiten Menge als die Anzahl von effektiven Pfaden.

9.   Computerlesbares Speichermedium, das ein Computerprogramm darauf gespeichert aufweist, wobei das Programm, wenn es durch einen Prozessor ausgeführt wird, das Kanalschätzungsverfahren nach einem der Ansprüche 1 bis 7 implementiert.

**Revendications**

1.   Procédé d'estimation de canal, comprenant :

la détermination d'une estimation de canal initiale selon une séquence d'entraînement de domaine temporel reçue et une séquence d'entraînement de domaine temporel locale, et le calcul de la puissance de chaque chemin de l'estimation de canal initiale (S110) ;

la définition d'une fenêtre d'estimation de canal d'une longueur prédéfinie dans l'estimation de canal initiale, et la détermination d'un seuil de bruit selon la puissance d'un chemin à l'intérieur de la fenêtre d'estimation de canal et/ou de la puissance d'un chemin à l'extérieur de la fenêtre d'estimation de canal (S120) ;

la détermination d'un nombre de chemins efficaces selon le seuil de bruit et la puissance de chaque chemin de la fenêtre d'estimation de canal (S130) ; et

la sélection d'un chemin en vue de l'estimation de canal initiale selon le nombre de chemins efficaces pour obtenir une estimation de canal cible (S140) ;

dans lequel la détermination d'un nombre de chemins efficaces selon le seuil de bruit et la puissance de chaque chemin comprend : la comparaison de la puissance de chaque chemin dans la fenêtre d'estimation de canal avec le seuil de bruit respectivement, l'acquisition de la quantité de chemins dont la puissance est supérieure au seuil de bruit ;

après l'acquisition de la quantité de chemins dont la puissance est supérieure au seuil de bruit, le procédé comprend en outre :

la détermination des chemins dont la puissance est supérieure au seuil de bruit dans la fenêtre d'estimation de canal comme chemins efficaces initiaux, et le calcul de la puissance totale des chemins efficaces initiaux comme première puissance totale ;

le calcul d'une puissance totale d'une deuxième quantité de chemins avec une puissance maximale parmi les chemins efficaces initiaux comme deuxième puissance totale ;

le calcul d'une puissance totale d'une troisième quantité de chemins avec une puissance maximale parmi les chemins efficaces initiaux comme troisième puissance totale, la deuxième quantité étant supérieure à la troisième quantité de 1 ; et

si un rapport entre la deuxième puissance totale et la première puissance totale est supérieur ou égal à une première valeur définie et qu'un rapport entre la troisième puissance totale et la première puissance totale est inférieur à la première valeur définie, la détermination de la deuxième quantité comme étant le nombre de chemins efficaces.

2. Procédé selon la revendication 1, dans lequel la détermination d'une estimation de canal initiale selon une séquence d'entraînement de domaine temporel reçue et une séquence d'entraînement de domaine temporel locale comprend :

la corrélation de la séquence d'entraînement de domaine temporel reçue et la séquence d'entraînement de domaine temporel locale pour obtenir une estimation de canal initiale.

3. Procédé selon la revendication 1, dans lequel la détermination d'une estimation de canal initiale selon une séquence d'entraînement de domaine temporel reçue et une séquence d'entraînement de domaine temporel locale comprend :

la réalisation d'une transformation de Fourier sur la séquence d'entraînement de domaine temporel reçue et sur la séquence d'entraînement de domaine temporel locale pour obtenir une première séquence d'entraînement de domaine fréquentiel et une seconde séquence d'entraînement de domaine fréquentiel ; et

la multiplication de la première séquence d'entraînement de domaine fréquentiel et la seconde séquence d'entraînement de domaine fréquentiel, et la réalisation d'une transformée de Fourier inverse sur un résultat de la multiplication pour obtenir une estimation de canal initiale.

4. Procédé selon la revendication 1, dans lequel la détermination d'un seuil de bruit selon la puissance d'un chemin à l'intérieur de la fenêtre d'estimation de canal comprend :

le calcul d'une valeur moyenne de puissance d'une première quantité de chemins avec une puissance minimale dans la fenêtre d'estimation de canal, et la détermination de la valeur moyenne de puissance comme puissance de bruit ; et

la pondération de la puissance de bruit selon un facteur de seuil de bruit défini pour obtenir un seuil de bruit.

5. Procédé selon la revendication 1, dans lequel la détermination d'un seuil de bruit selon la puissance d'un chemin en dehors de la fenêtre d'estimation de canal comprend :

le calcul d'une valeur moyenne de puissance des chemins situés en dehors de la fenêtre d'estimation de canal, et la détermination de la valeur moyenne de puissance comme puissance de bruit ; et

la pondération de la puissance de bruit selon un facteur de seuil de bruit défini pour obtenir un seuil de bruit.

6. Procédé selon la revendication 1, dans lequel, après la détermination du nombre de chemins efficaces selon le seuil de bruit et la puissance de chaque chemin dans la fenêtre d'estimation de canal, le procédé comprend en outre :

le retour à la réalisation de l'étape consistant à déterminer une estimation de canal initiale selon une séquence d'entraînement de domaine temporel reçue et une séquence d'entraînement de domaine temporel locale jusqu'à ce que le nombre de fois où l'on obtient le nombre de chemins efficaces atteigne un nombre défini ; et
en conséquence, la sélection d'un chemin pour l'estimation de canal initiale selon le nombre de chemins efficaces pour obtenir une estimation de canal cible comprend :
le calcul d'une valeur moyenne du nombre de chemins efficaces parmi le nombre défini, et la sélection d'un chemin pour l'estimation de canal initiale selon la valeur moyenne du nombre de chemins efficaces pour obtenir une estimation de canal cible.

7. Procédé selon la revendication 6, dans lequel la sélection d'un chemin pour l'estimation de canal initiale selon la valeur moyenne du nombre de chemins efficaces pour obtenir une estimation de canal cible comprend :

si la valeur moyenne est supérieure à une seconde valeur définie, la détermination des chemins de puissance maximale avec la quantité égale à la valeur moyenne dans la fenêtre d'estimation de canal comme chemins de signal, et la détermination des chemins autres que les chemins de signal dans l'estimation de canal initiale comme chemins de bruit ; et
si la valeur moyenne est inférieure à la deuxième valeur définie, la détermination des chemins de puissance maximale dont la quantité est égale à la seconde valeur définie dans la fenêtre d'estimation de canal comme étant des chemins de signal, et la détermination des chemins autres que les chemins de signal dans l'estimation de canal initiale comme étant des chemins de bruit.

8. Appareil d'estimation de canal, comprenant :

un module de détermination d'estimation de canal initial (210), configuré pour déterminer une estimation de canal initiale selon une séquence d'entraînement de domaine temporel reçue et une séquence d'entraînement de domaine temporel locale, et calculer la puissance de chaque chemin de l'estimation de canal initiale ;
un module de détermination de seuil de bruit (220), configuré pour fournir une fenêtre d'estimation de canal d'une longueur définie dans l'estimation de canal initiale, et déterminer un seuil de bruit selon la puissance d'un chemin à l'intérieur de la fenêtre d'estimation de canal et/ou la puissance d'un chemin à l'extérieur de la fenêtre d'estimation de canal ;
un module de détermination de quantité de chemins efficaces (230), configuré pour déterminer un nombre de chemins efficaces selon le seuil de bruit et la puissance de chaque chemin de la fenêtre d'estimation de canal ; et
un module d'acquisition d'estimation de canal cible (240), configuré pour sélectionner un chemin pour l'estimation de canal initiale selon le nombre de chemins efficaces afin d'obtenir une estimation de canal cible ;
le module de détermination de quantité de chemins efficaces (230) est en outre configuré pour comparer la puissance de chaque chemin dans la fenêtre d'estimation de canal avec le seuil de bruit respectivement, en acquérant la quantité de chemins dont la puissance est supérieure au seuil de bruit ; déterminer les chemins dont la puissance est supérieure au seuil de bruit dans la fenêtre d'estimation de canal comme chemins efficaces initiaux, et calculer la puissance totale des chemins efficaces initiaux comme première puissance totale ; calculer une puissance totale d'une deuxième quantité de chemins avec une puissance maximale parmi les chemins efficaces initiaux comme deuxième puissance totale ; calculer une puissance totale d'une troisième quantité de chemins avec une puissance maximale parmi les chemins efficaces initiaux comme troisième puissance totale, la deuxième quantité étant supérieure à la troisième quantité de 1 ; et si le rapport entre la deuxième puissance totale et la première puissance totale est supérieur ou égal à une première valeur définie et que le rapport entre la troisième puissance totale et la première puissance totale est inférieur à la première valeur définie, déterminer la deuxième quantité comme étant le nombre de chemins efficaces.

9. Support de stockage lisible par ordinateur, stockant un programme informatique, dans lequel, lorsqu'il est exécuté par un processeur, le programme met en œuvre le procédé d'estimation de canal selon l'une quelconque des revendications 1 à 7.

An initial channel estimation is determined according to a received time-domain training sequence and a local time-domain training sequence, and the power of each path of the initial channel estimation is calculated ⌒⌣ $S110$

↓

A channel estimation window of a set length is provided in the initial channel estimation, and a noise threshold is determined according to the power of a path within the channel estimation window and/or the power of a path outside the channel estimation window ⌒⌣ $S120$

↓

A number of effective paths is determined according to the noise threshold and the power of each path of the channel estimation window ⌒⌣ $S130$

↓

A path is selected for the initial channel estimation according to the number of effective paths to obtain a target channel estimation ⌒⌣ $S140$

**Fig. 1**

210

220

Initial channel
estimation
determination module

Noise threshold
determination module

240

230

Effective path quantity
determination module

Target channel
estimation acquisition
module

**Fig. 2**

Processor

310

320

Memory

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010057382 A
- CN 110311871
- EP 2120359 A
- US 2018034731 A